# EUROPEAN PATENT APPLICATION

(11) **EP 4 510 090 A1**
(43) Date of publication of application: **19.02.2025**
(21) Application number: 23191533.1
(22) Date of filing: 15.08.2023
(51) Int. Cl.: G06V 20/62, G06V 30/19, G06V 10/74

(54) **METHOD AND SYSTEM FOR LICENSE PLATE RECOGNITION**

(71) Applicant: Skidata GmbH, 5083 Grödig/Salzburg (AT)
(72) Inventor: HALMICH, Christina, 5083 Salzburg (AT); HAIDACHER, Martin, 5083 Salzburg (AT); PÖLZLEITNER, Anton, 5083 Salzburg (AT)
(74) Representative: Mewburn Ellis LLP

(57) **Abstract**

The invention relates to a method for recognizing a register plate. The method comprises providing a first and second sequence of characters. Based on optical images of the sequences, a similarity is determined between the first and second sequences of characters by comparing each character of the first sequence with each character of the second sequence. Comparing comprises determining a first sum of a similarity score for the i-th character of the first sequence and the j-th character of the second sequence as a first term of the first sum, and a maximum similarity score of the (i-1)-th character of the first sequence and the (j-1)-th character of the second sequence as a second term of the first sum. Comparing also comprises determining a second and third sum of maximum similarity scores of characters in the first and second sequences as a first and second term of the second and third sum respectively, and a first and second gap penalty value as a second term of the second and third sum respectively. Maximum values among each of the results of the first, second and third sums are stored. Similar visual appearance of characters in the sequences is determined based on these maximum values.

## Description

### FIELD OF THE INVENTION

The present invention relates to the field of computer vision and image processing. More specifically, it pertains to a method and system for register plate recognition.

### DESCRIPTION OF THE RELATED ART

Register plate recognition systems have gained significant importance in various applications such as law enforcement, traffic management, toll collection, parking management, and vehicle tracking. These systems employ computer vision algorithms to extract and interpret the characters on register plates from images or video streams captured by cameras. Register plates are also sometimes referred to as vehicle registration plates, number plates or license plates. Register plate recognition can also be referred to as automatic license plate recognition (ALPR). For precise ALPR and correct assignment of a license plate and a transaction e.g., payment over license plate, all characters of the plate must be read correctly.

Existing register plate recognition systems often face challenges in accurately identifying register plates due to factors such as variations in plate sizes, fonts, colours, lighting conditions, and occlusions. Particularly, in some countries certain characters are equal e.g., in Austria a zero is the same symbol as the letter O. In other countries the symbols are like each other e.g., in Italy the G and C letter are almost identical and hardly distinguishable. This makes it difficult for ALPR systems to distinguish these characters without an underlying assumption about the grammatic (e.g. on a certain position only a letter is allowed and no number, ...) of a certain country. Traditional approaches rely on handcrafted feature extraction algorithms and rule-based techniques, which may not be robust enough to handle diverse and complex scenarios. Mostly, certain grammatic rules are implemented for these countries that chose specific characters from the position on the plate. Nonetheless, these grammatic is not always valid. In Austria there is the possibility to create custom plates, which will not follow the same grammatic as the letter and numbers are changed in position. Furthermore, if a grammatic rule is in place it is most likely to influence recognitions from license plates of a different country, which will occur regularly in a European parking lot depending on its location. To improve the recognition rate for these countries, these symbols/characters must be treated in a unique way.

Furthermore, the increasing volume of vehicles on roads and the need for real-time processing call for improved recognition. Improved methods are required to enhance the accuracy, speed, and reliability of ALPR systems, thereby enabling better traffic management, security, and enforcement measures. Particularly for access restricted parking reliable ALPR is important to avoid customer frustration and provide reliable access.

An alternative solution would be an alternative identification method to the license plate, such as additional tags (e.g., RFID or UHF). Those allow a reliable recognition of vehicles, but they do have the drawback that you need to register those tags first and provide them to the users. Furthermore, some tags (e.g., RFID) need additional interaction (hold the data carrier to a reader) which reduces the convenience. In the future it might be a possible scenario that vehicles have some kind of tags integrated (i.e., C2X communication). However, this is an ongoing discussion, and it does not look like a common standard will arise anytime soon.

### SUMMARY OF THE INVENTION:

While the invention is defined in the independent claims, further aspects of the invention are set forth in the dependent claims, the drawings and the following description.

### BRIEF DESCRIPTION OF THE FIGURES

Fig. 1 shows an exemplary license plate for recognition by the ALPR system;
Fig. 2A provides an exemplary table showing the ALPR system;
Fig. 2B provides a further exemplary table showing the ALPR system;
Fig. 3A provides a further exemplary table showing the ALPR system; and
Fig. 3B provides a further exemplary table showing the ALPR system.

### DESCRIPTION OF THE PREFERRED EMBODIMENTS

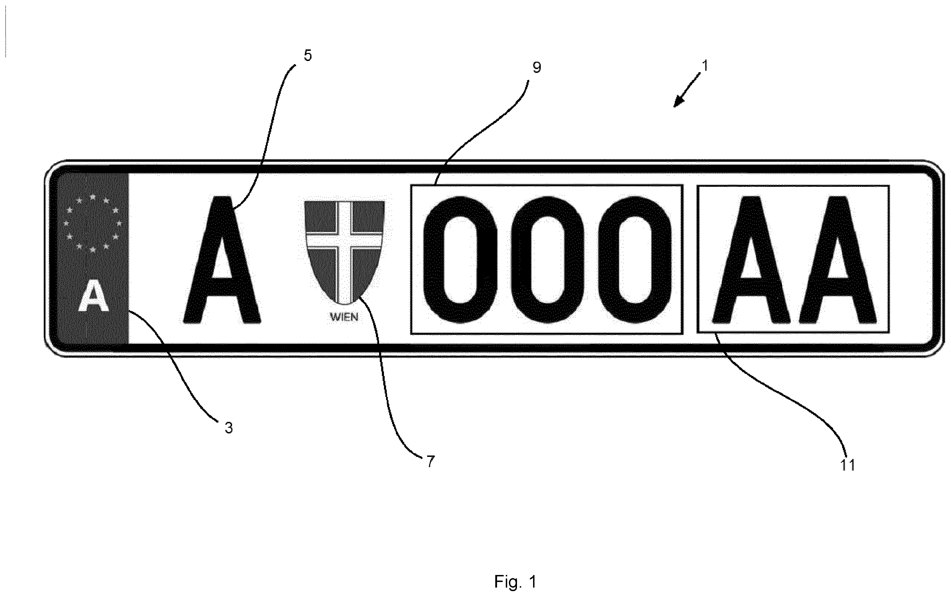

Fig. 1 shows an exemplary register plate 1. Before explaining the ALPR system in detail, some general aspects of the invention will be discussed.

According to an aspect a method for recognizing a register plate, the method comprises:
- providing a first sequence of characters;
- providing a second sequence of characters; and
- determining a similarity between the first and second sequences of characters; wherein at least one of the first and second sequences of characters is recorded by an image detecting device and determining the similarity comprises:
   - comparing each character of the first sequence with each character of the second sequence, wherein comparing comprises:
      - determining for the i-th character of the first sequence and the j-th character of the second sequence:
         - a first sum of a similarity score for the i-th character of the first sequence and the j-th character of the second sequence as a first term of the first sum, and a maximum similarity score of the (i-1)-th character of the first sequence and the (j-1)-th character of the second sequence as a second term of the first sum;
         - a second sum of a maximum similarity score of the (i-1)-th character of the first sequence and the j-th character of the second sequence as a first term of the second sum, and a first gap penalty value as a second term of the second sum;
         - a third sum of a maximum similarity score of the i-th character of the first sequence and the (j-1)-th character of the second sequence as a first term of the third sum, and a second gap penalty value as a second term of the third sum; and
         - a maximum value among each of the results of the first, second and third sums;
         - storing the maximum value as a maximum similarity score for each comparing of each character of the first sequence with each character of the second sequence;
         - determining the maximum of the stored maximum values;
wherein the similarity score has a highest value if the i-th character of the first sequence and the j-th character of the second sequence are identical, has an intermediate value if the i-th character of the first sequence and the j-th character of the second sequence are different and have a similar visual appearance, and has a lowest value if the i-th character of the first sequence and the j-th character of the second sequence are different and have a dissimilar visual appearance.

The invention uses a sequences alignment algorithm previously only used in bioinformatics to define how similar certain sequences are. In various embodiments such sequences are license plates, such as license plates for car registration. An exemplary sequence alignment algorithm is named Needleman-Wunsch algorithm. The Needleman-Wunsch algorithm assigns a score to every possible sequence alignment with the purpose of finding the highest similarity score. Thereby a scoring of three distinct types is used. The first type describes a match, when two letters at the current index are the same resulting in an increasing similarity score. The second one describes if two letters at the current index are different, it will be counted as a mismatch, which will decrease the similarity score. The third type is called 'indel', which is a combination of INsertion and DELetion. Hereby one letter in the string aligns with a gap in the other string. This will also decrease the similarity score.

The sequences alignment algorithm uses a so-called fluid mismatch interpretation. In various embodiments the fluid mismatch interpretation is defined for each country. In various embodiments the mismatch is a visually similar character e.g., O and 0 in the Austrian license plate. In various embodiments the sequences alignment algorithm according to the invention assigns an intermediate value for a fluid mismatch. In various embodiments this is a positive value for mismatch and thereby increase the similarity score. In various embodiments in case there is some other mismatch the sequences alignment algorithm decreases the similarity score. An example of the way the fluid mismatch algorithm works can be seen in the examples further below, where each example refers to a Needleman-Wunsch table in the figures for comparing two license plates.

In various embodiments the ALPR system is used in combination with image preprocessing techniques, such as image enhancement, noise reduction, and adaptive thresholding, to improve the quality of input images and enhance the detection of license plates. In various embodiments, the ALPR system incorporates techniques for handling occlusions, perspective distortions, and variations in plate orientation and aspect ratios. In various embodiments the ALPR system is applied to license plates of cars, trucks, motorcycles and/or other participants in public traffic requiring a license plate. In various embodiments the system is applied to registration plates of containers and/or autonomous load carrying vehicles in warehouses, mail processing and distribution centres, shipment transloading facilities, distribution hubs and/or factories. In various embodiments the system is applied to registration plates of shipping containers. In various embodiments the system is applied to input provided orally by a user.

The proposed system operates in real-time, making it suitable for applications that require immediate response and high throughput, such as toll collection systems or security checkpoints. It can be deployed on a range of hardware platforms, including embedded devices, and surveillance cameras.

The inventive method and system for register plate recognition offer advantages over existing systems, including improved accuracy, robustness, and scalability. The increased reliability and efficiency of register plate recognition can lead to enhanced traffic management, law enforcement, and security measures, thus benefiting various industries and public services.

In various embodiments "i" equals "1" for the first character of the first sequence, "j" equals "1" for the first character of the second sequence, a maximum similarity score for "i" equal "0" and "j" equal "0" is zero, a maximum similarity score for the i-th character of the first sequence and "j" equal zero is a fourth sum of the maximum similarity score of the (i-1)-th character of the first sequence and a third gap penalty, and a maximum similarity score for "i" equal zero and the j-th character of the second sequence is a fifth sum of a fourth gap penalty and the maximum similarity score of the (j-1)-th character of the second sequence.

In various embodiments the intermediate value is based on a probability that the i-th character of the first sequence and the j-th character of the second sequence are confused based on their visual appearance.

In various embodiments at least one of the first and second sequences of characters is read from a register plate.

In various embodiments the intermediate value is based on an assessment of an organisation of origin of the register plate and on an assessment of similarities of different characters used for register plates of the respective organisation. In various embodiments the sequences alignment algorithm follows an assessment of a country of origin of the register plate. In various embodiments the assessment of the country of origin is used to determine the fluid mismatch interpretation. In various embodiments the assessment of the country of origin is used to determine the intermediate value for a fluid mismatch.

In various embodiments the method comprises providing representations of characters eligible for a register plate, pairwise comparing the representations of different characters with each other, assessing a probability of confusion for each pair of representations of different characters based on their visual appearance, based on the probability of confusion distinguishing pairs of representations of different characters where confusion is probable, and for the pairs of representations of different characters where confusion is probable determining the intermediate value based on the probability of confusion.

According to a second aspect a device for recognizing a register plate is provided. The device comprises an interface for receiving signals from an image detecting device and a processor, the processor being configured to:
- providing a first sequence of characters;
- providing a second sequence of characters; and
- determining a similarity between the first and second sequences of characters; wherein at least one of the first and second sequences of characters is received from an image detecting device via the interface and determining the similarity comprises:
   - comparing each character of the first sequence with each character of the second sequence, wherein comparing comprises:
      - determining for the i-th character of the first sequence and the j-th character of the second sequence:
         - a first sum of a similarity score for the i-th character of the first sequence and the j-th character of the second sequence as a first term of the first sum, and a maximum similarity score of the (i-1)-th character of the first sequence and the (j-1)-th character of the second sequence as a second term of the first sum;
         - a second sum of a maximum similarity score of the (i-1)-th character of the first sequence and the j-th character of the second sequence as a first term of the second sum, and a first gap penalty value as a second term of the second sum;
         - a third sum of a maximum similarity score of the i-th character of the first sequence and the (j-1)-th character of the second sequence as a first term of the third sum, and a second gap penalty value as a second term of the third sum; and
         - a maximum value among each of the results of the first, second and third sums;
         - storing the maximum value as a maximum similarity score for each comparing of each character of the first sequence with each character of the second sequence;
         - determining the maximum of the stored maximum values;
wherein the similarity score has a highest value if the i-th character of the first sequence and the j-th character of the second sequence are identical, has an intermediate value if the i-th character of the first sequence and the j-th character of the second sequence are different and have a similar visual appearance, and has a lowest value if the i-th character of the first sequence and the j-th character of the second sequence are different and have a dissimilar visual appearance.

Presently, the intermediate value is principally somewhere between and including the lowest value and the highest value.

According to a third aspect a system for recognizing a register plate is provided. The system comprises an image detecting device and a processor, the processor being configured to:
- providing a first sequence of characters;
- providing a second sequence of characters; and
- determining a similarity between the first and second sequences of characters; wherein at least one of the first and second sequences of characters is received from the image detecting device and determining the similarity comprises:
   - comparing each character of the first sequence with each character of the second sequence, wherein comparing comprises:
      - determining for the i-th character of the first sequence and the j-th character of the second sequence:
         - a first sum of a similarity score for the i-th character of the first sequence and the j-th character of the second sequence as a first term of the first sum, and a maximum similarity score of the (i-1)-th character of the first sequence and the (j-1)-th character of the second sequence as a second term of the first sum;
         - a second sum of a maximum similarity score of the (i-1)-th character of the first sequence and the j-th character of the second sequence as a first term of the second sum, and a first gap penalty value as a second term of the second sum;
         - a third sum of a maximum similarity score of the i-th character of the first sequence and the (j-1)-th character of the second sequence as a first term of the third sum, and a second gap penalty value as a second term of the third sum; and
         - a maximum value among each of the results of the first, second and third sums;
         - storing the maximum value as a maximum similarity score for each comparing of each character of the first sequence with each character of the second sequence;
         - determining the maximum of the stored maximum values;
wherein the similarity score has a highest value if the i-th character of the first sequence and the j-th character of the second sequence are identical, has an intermediate value if the i-th character of the first sequence and the j-th character of the second sequence are different and have a similar visual appearance, and has a lowest value if the i-th character of the first sequence and the j-th character of the second sequence are different and have a dissimilar visual appearance.

In various embodiments the image detecting device is an optical camera.

Coming back to the description of Fig. 1, the register plate 1 comprises fields with characters 3, 5, 7 9, 11. In various embodiments the fields with characters 3, 5, 7 9, 11 comprise an area code, an indicator for the age of a vehicle, an authority issuing the register plate 1 and/or a random character string providing an individual designation of the vehicle and/or an operator. The fields with characters form a character string.

In the embodiment depicted in Fig. 1, the register plate 1 is comprised of one line of characters read from left to right. The line of characters comprises a country designation 3, a region indicator 5, and an emblem 7. In various embodiments, the country designation 3, the region indicator 5, and/or the emblem 7 constitute an area code and/or indicate an issuing authority.

In the embodiment in Fig. 1, the line of characters comprises a number field 9 and a letter field 11. In various embodiments the number field 9 follows the country designation 3, the region indicator 5, and/or the emblem 7. In various embodiments the letter field 11 follows the number field 9. In various embodiments the number field 9 follows the letter field 11. In various embodiments the line of characters comprises at least two number fields. In various embodiments the line of characters comprises at least two letter fields. In various embodiments the line of characters comprises at least one field having both, letters and numbers. In various embodiments a sequences alignment algorithm deducts from the country designation 3, the region indicator 5, and/or the emblem 7 whether any pair of letters and/or characters are similar. In various embodiments a sequences alignment algorithm assesses generally that two characters are similar. In various embodiments, when two characters are assessed to be similar, an intermediate value for a fluid mismatch is determined. In various embodiments, a likelihood of confusion is determined for any two characters and an intermediate value for a fluid mismatch is determined on the basis of the likelihood of confusion. In various embodiments a likelihood of confusion is determined for groups of characters, particularly groups such as "nn" and "rm", "vv" and "w", and "ti" and "h".

In a typical application, a camera makes a photography or film of a register plate associated with a vehicle and the film or photography is processed to extract a first character string. The first character string is stored to be compared to a second character string. In various embodiments the camera is placed at an entrance or exit of a parking area. In various embodiments the second character string is listed in a pre-existing database and the first character string is compared to the second character string to assess whether they are similar. If the first character string and the second character string are assessed to be similar, a barrier opens and allows the vehicle to pass. In various embodiments a fee is then deducted from an account of the vehicle owner or operator. If the first character string and the second character string are assessed to be dissimilar, the barrier remains shut and blocks the vehicle from passing.

In various embodiments the similarity is assessed by means of a sequence alignment algorithm, particularly a Needleman-Wunsch algorithm. The Needleman-Wunsch algorithm is typically used to align protein or nucleotide sequences. The Needleman-Wunsch algorithm is particularly suitable for ALPR as this algorithm provides a high quality of the global alignment. In the following, the Needleman-Wunsch algorithm will be explained by way of an example. In the example, the first character string is HABEO4. The second character string is HACE04. That is, the third positions are different, namely B and C, and the fourth positions are different, namely O and 0. The first character string is entered into the first row of a grid of boxes with each character in a separate box leaving the first two boxes of the first row empty. The second character string is entered into the first column of the grid of boxes with each character in a separate box leaving the first two boxes of the column empty. The second and every following row are then filled up with scores of each pair of letters of the corresponding row and column.

Particularly, for each box a scoring of three distinct types is used. The first type describes a match, when two letters at the current index, i.e. same row and same column, are the same usually resulting in an increasing similarity score. The second one describes if two letters at the current index are different, it will be counted as a mismatch, which will usually decrease the similarity score. The third type is called 'indel', which is a combination of INsertion and DELetion. Hereby one letter in the string aligns with a gap in the other string. This will also usually decrease the similarity score. For an alignment, the sum of the scores of all pairings is the final score.

In the following example, the Needleman-Wunsch scoring system is applied, where a match receives +1, a mismatch and an indel receive -1. The box of the second row and second column is scored "0". For each box a score is calculated recursively by first calculating the sum of the score of the left box and the indel score, the sum of the score of the top box and the indel score, and the sum of the score of the top-left box and the score for match or mismatch, and second determining the maximum of the three sums. The maximum is the score of the respective box. The boxes thus must be calculated row-wise from top to bottom or column-wise from left to right.

For the second row of the grid, there is no top box and only the indel score is added to the score of the respective left box. The second row is thus filled with -1, -2, -3, -4, -5, -6 as of the box in the third column. Likewise, for the second column of the grid, there is no left box and only the indel score is added to the score of the respective top box. The second column thus is filled with -1, -2, -3, -4, -5, -6 as of the box in the third box.

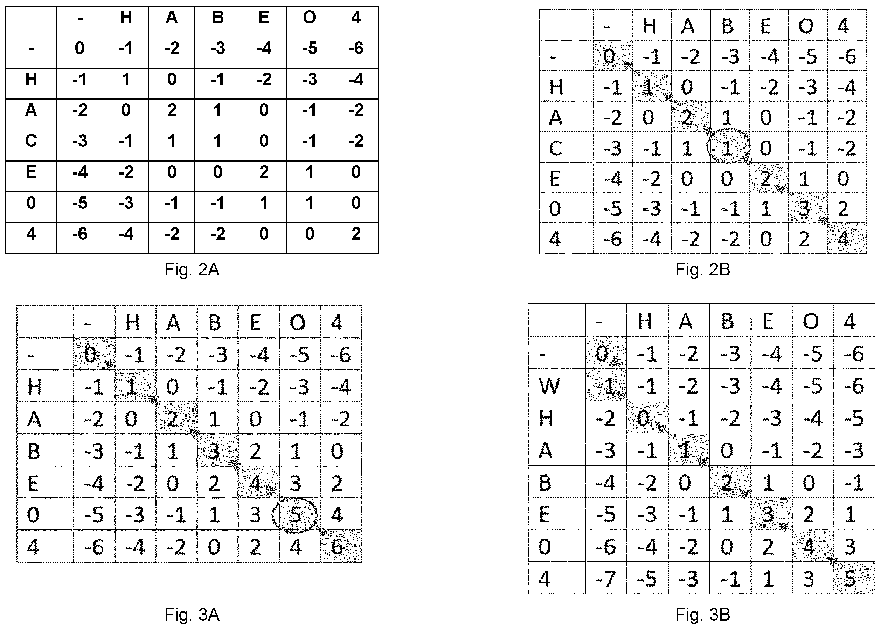

Fig. 2A shows the grid of boxes according to this example.

For row-wise processing, the similarity of H on the first position in the third row with each of the characters in the first row is then conducted as follows:

H-H: similarity of this pair is a match, thus receives +1. The top left box has 0. The first score for H-H is +1 + 0 = 1. The top box has -1, the second score is calculated by adding the indel value, -1; the second score for H-H thus is -1 + (-1) = -2. The left box has -1, the third score is calculated by adding the indel value, -1; the third score for H-H thus is -1 + (-1) = -2. The maximum of the first to third scores for H-H is 1, from the first score for H-H. The box H-H thus receives the value 1. The box contributing to this result is top-left of H-H and is likewise noted.

H-A: similarity for this pair is a mismatch, thus receives -1, the top left box has -1. The first score for H-A thus is -1 + (-1) = -2. The top box has -2, the second score is calculated by adding the indel value, -1; the second score for H-A thus is -2 + (-1) = -3. The left box has 1, the third score is calculated by adding the indel value, -1; the third score for H-A thus is 1 + (-1) = 0. The maximum of the first to third scores for H-A is 0, from the third score for H-A. The box H-A thus receives the value 0. The box contributing to this result is left and is likewise noted.

H-B: similarity for this pair is a mismatch, thus receives -1, the top left box has -2. The first score for H-B thus is -1 + (-2) = -3. The top box has -3, the second score is calculated by adding the indel value, -1; the second score for H-B thus is -3 + (-1) = -4. The left box has 0, the third score is calculated by adding the indel value, -1; the third score for H-B thus is 0 + (-1) = -1. The maximum of the first to third scores for H-B is -1, from the third score for H-B. The box H-B thus receives the value -1. The box contributing to this result is left and is likewise noted.

H-E: similarity for this pair is a mismatch, thus receives -1, the top left box has -3. The first score for H-E thus is -1 + (-3) = -4. The top box has -4, the second score is calculated by adding the indel value, -1; the second score for H-E thus is -4 + (-1) = -5. The left box has -1, the third score is calculated by adding the indel value, -1; the third score for H-E thus is -1 + (-1) = -2. The maximum of the first to third scores for H-E is -2, from the third score for H-E. The box H-E thus receives the value -2. The box contributing to this result is left and is likewise noted.

H-O: similarity for this pair is a mismatch, thus receives -1, the top left box has -4. The first score for H-O thus is -1 + (-4) = -5. The top box has -5, the second score is calculated by adding the indel value, -1; the second score for H-O thus is -5 + (-1) = -6. The left box has -2, the third score is calculated by adding the indel value, -1; the third score for H-O thus is -2 + (-1) = -3. The maximum of the first to third scores for H-O is -3, from the third score for H-O. The box H-O thus receives the value -3. The box contributing to this result is left and is noted.

H-4: similarity for this pair is a mismatch, thus receives -1, the top left box has -5. The first score for H-4 thus is -1 + (-5) = -6. The top box has -6, the second score is calculated by adding the indel value, -1; the second score for H-4 thus is -6 + (-1) = -7. The left box has -3, the third score is calculated by adding the indel value -1; the third score for H-4 thus is -3 + (-1) = -4. The maximum of the first to third scores for H-4 is -4, from the third score for H-4. The box H-4 thus receives the value -4. The box contributing to this result is left and is noted.

In various embodiments, the similarity of A on the second position in the fourth row with each of the characters in the first row is then conducted as follows:

A-H: similarity for this pair is a mismatch, thus receives -1, the top left box has -1. The first score for A-H thus is -1 + (-1) = -2. The top box has 1, the second score is calculated by adding the indel value, -1; the second score for A-H thus is 1 + (-1) = 0. The left box has -2, the third score is calculated by adding the indel value, -1; the third score for A-H thus is -2 + (-1) = -3. The maximum of the first to third scores for A-H is 0, from the second score for A-H. The box A-H thus receives the value 0. The box contributing to this result is top and is likewise noted.

A-A: similarity of this pair is a match, thus receives +1. The top left box has 1. The first score for A-A is +1 + 1 = 2. The top box has 0, the second score is calculated by adding the indel value, -1; the second score for A-A is 0 + (-1) = -1. The left box has 0, the third score is calculated by adding the indel value, -1; the third score for A-A is 0 + (-1) = -1. The maximum of the first to third scores for A-A is 2, from the first score for A-A. The box A-A thus receives the value 2. The box contributing to the result is top left and is likewise noted.

A-B: similarity for this pair is a mismatch, thus receives -1, the top left box has 0. The first score for A-B is -1 + 0 = -1. The top box has -1, the second score is calculated by adding the indel value, -1; the second score for A-B is -1 + (-1) = -2. The left box has 2, the third score is calculated by adding the indel value, -1; the third score for A-B is 2 + (-1) = 1. The maximum of the first to third scores for A-B is 1, from the third score for A-B. The box A-B thus receives the value 1. The contributing box is left and is likewise noted.

A-E: similarity for this pair is a mismatch, thus receives -1, the top left box has -1. The first score for A-E is -1 + (-1) = -2. The top box has -2, the second score is calculated by adding the indel value, -1; the second score for A-E is -2 + (1) = -3. The left box has 1, the third score is calculated by adding the indel value, -1; the third score for A-E is 1 + (-1) = 0. The maximum of the first to third scores for A-E is 0, from the third score for A-E. The box A-E thus receives the value 0, the box contributing to the result is left and is likewise noted.

A-O: similarity for this pair is a mismatch, thus receives -1, the top left box has -2. The first score for A-O is -1 + (-2) = -3. The top box has -3, the second score is calculated by adding the indel value, -1; the second score for A-O is -3 + (-1) = -4. The left box has 0, the third score is calculated by adding the indel value, -1; the third score for A-O is 0 + (-1) = -1. The maximum of the first to third scores for A-O is -1, from the third score for A-O. The box A-O thus receives the value -1, the box contributing to the result is left and is noted.

A-4: similarity for this pair is a mismatch, thus receives -1, the top left box has -3. The first score for A-4 is -1 + (-3) = -4. The top box has -4, the second score is calculated by adding the indel value, -1; the second score for A-4 is -4 + (-1) = -5. The left box has -1, the third score is calculated by adding the indel value, -1; the third score for A-4 is -1 + (-1) = -2. The maximum of the first to third scores for A-4 is -2, from the third score for A-4. The box A-4 thus receives the value -2, the box contributing to the result is left and is noted.

In various embodiments, the similarity of C on the third position in the fifth row with each of the characters in the first row is then conducted as follows:

C-H: similarity for this pair is a mismatch, thus receives -1, the top left box has -2. The first score for C-H is -1 + (-2) = -3. The top box has 0, the second score is calculated by adding the indel value, -1; the second score for C-H is 0 + (-1) = -1. The left box has -3, the third score is calculated by adding the indel value, -1; the third score for C-H is -3 + (-1) = -4. The maximum of the first to third scores for C-H is -1, from the second score for C-H. The box C-H thus receives -1, the box contributing to the result is top and is noted.

C-A: similarity for this pair is a mismatch, thus receives -1, the top left box has 0. The first score for C-A is -1 + 0 = -1. The top box has 2, the second score is calculated by adding the indel value, -1; the second score for C-A is 2 + (-1) = 1. The left box has -1, the third score is calculated by adding the indel value, -1; the third score for C-A is -1 + (-1) = -2. The maximum of the first to third scores for C-A is 1, from the second score for C-A. The box C-A thus receives 1, the box contributing to the result is top and is noted.

C-B: similarity for this pair is a mismatch, thus receives -1, the top left box has 2. The first score for C-B is -1 + 2 = 1. The top box has 1, the second score is calculated by adding the indel value, -1; the second score for C-B is 1 + (-1) = 0 The left box has 1, the third score is calculated by adding the indel value, -1; the third score for C-B is 1 + (-1) = 0. The maximum of the first to third scores for C-B is 1, from the first score for C-B. The box C-B thus receives 1, the box contributing to the result is top left and is noted.

C-E: similarity for this pair is a mismatch, thus receives -1, the top left box has 1. The first score for C-E is -1 + 1 = 0. The top box has 0, the second score is calculated by adding the indel value, -1; the second score for C-E is 0 + (-1) = -1. The left box is 1, the third score is calculated by adding the indel value, -1; the third score for C-E is 1 + (-1) = 0. The maximum of the first to third scores for C-E is 0, from both, first and third scores for C-E. The box C-E thus receives 0, each of the top left and left boxes contribute to the result and are noted.

C-O: similarity for this pair is a mismatch, thus receives -1, the top left box has 0. The first score for C-O is -1 + 0 = -1. The top box has -1, the second score is calculated by adding the indel value, -1; the second score for C-O is -1 + (-1) = -2. The left box is 0, the third score is calculated by adding the indel value, -1; the third score for C-O is 0 + (-1) = -1. The maximum of the first to third scores for C-O is -1 from both, first and third scores for C-O. The box C-O thus receives -1, each of the top left and left boxes contribute to the result and are noted.

C-4: similarity for this pair is a mismatch, thus receives -1, the top left box has -1. The first score for C-4 is -1 + (-1) = -2. The top box has -2, the second score is calculated by adding the indel value, -1; the second score for C-4 is -2 + (-1) = -3. The left box is -1, the third score is calculated by adding the indel value, -1; the third score for C-4 is -1 + (-1) = -2. The maximum of the first to third scores for C-4 is -2 from both, first and third scores for C-4. The box C-4 thus receives -2, each of the top left and left boxes contribute to the result and are noted.

E-H: similarity for this pair is a mismatch, thus receives -1, the top left box has -3. The first score for E-H thus is -1 + (-3) = -4. The top box has -1, the second score is calculated by adding the indel value, -1; the second score for E-H is -1 + (-1) = -2. The left box is -4, the third score is calculated by adding the indel value, -1; the third score for E-H is -4 + (-1) = -5. The maximum of the first to third scores for E-H is -2 from the second score for E-H. The box E-H thus receives the value -2. The box contributing to the result is top and is noted.

E-A: similarity for this pair is a mismatch, thus receives -1, the top left box has -1. The first score for E-A is -1 + (-1) = -2. The top box has 1, the second score is calculated by adding the indel value, -1; the second score for E-A is 1 + (-1) = 0. The left box is -2, the third score is calculated by adding the indel value, -1; the third score for E-A is -2 + (-1) = -3. The maximum of the first to third scores for E-A is 0 from the second score for E-A. The box E-A thus receives the value 0. The box contributing to the result is top and is noted.

E-B: similarity for this pair is a mismatch, thus receives -1, the top left box has 1. The first score for E-B is -1 + 1 = 0. The top box has 1, the second score is calculated by adding the indel value, -1; the second score for E-B is 1 + (-1) = 0. The left box is 0, the third score is calculated by adding the indel value, -1; the third score for E-B is 0 + (-1) = -1. The maximum of the first to third scores for E-B is 0 from both, first and second scores for E-B. The box E-B thus receives the value 0. Each of the top left and top boxes contribute to the result and are noted.

E-E: similarity of this pair is a match, thus receives 1. The top left box has 1. The first score for E-E is 1 + 1 = 2. The top box has 0, the second score is calculated by adding the indel value, -1; the second score for E-E is 0 + (-1) = -1. The left box is 0, the third score is calculated by adding the indel value, -1; the third score for E-E is 0 + (-1) = -1. The maximum of the first to third scores for E-E is 2 from the first score for E-E. The box E-E thus receives the value 2. The box contributing to the result is top left and is noted.

E-O: similarity for this pair is a mismatch, thus receives -1, the top left box has 0. The first score for E-O is -1 + 0 = -1. The top box has -1, the second score is calculated by adding the indel value, -1; the second score for E-O is -1 + (-1) = -2. The left box is 2, the third score is calculated by adding the indel value, -1; the third score for E-O is 2 + (-1) = 1. The maximum of the first to third scores for E-O is 1 from the third score for E-O. The box E-O thus receives the value 1. The box contributing to the result is left and is noted.

E-4: similarity for this pair is a mismatch, thus receives -1, the top left box has -1. The first score for E-4 is -1 + (-1) = -2. The top box has -2, the second score is calculated by adding the indel value, -1; the second score for E-4 is -2 + (-1) = -3. The left box has 1, the third score is calculated by adding the indel value, -1; the third score for E-4 is 1 + (-1) = 0. The maximum of the first to third scores for E-4 is 0 from the third score for E-4. The box E-4 thus receives the value 0. The box contributing to the result is left and is noted.

0-H: similarity for this pair is a mismatch, thus receives -1, the top left box has -4. The first score for 0-H is -1 + (-4) = -5. The top box has -2, the second score is calculated by adding the indel value, -1; the second score for 0-H is -2 + (-1) = -3. The left box has -5, the third score is calculated by adding the indel value, -1; the third score for 0-H is -5 + (-1) = -6. The maximum of the first to third scores for 0-H is -3 from the second score for 0-H. The box 0-H thus receives the value -3. The box contributing to the result is top and is noted.

0-A: similarity for this pair is a mismatch, thus receives -1, the top left box has -2. The first score for 0-A is -1 + (-2) = -3. The top box has 0, the second score is calculated by adding the indel value, -1; the second score for 0-A is 0 + (-1) = -1. The left box has -3, the third score is calculated by adding the indel value, -1; the third score for 0-A is -3 + (-1) = -4. The maximum of the first to third scores for 0-A is -1 from the second score for 0-A. The box 0-A thus receives the value -1. The box contributing to the result is top and is noted.

0-B: similarity for this pair is a mismatch, thus receives -1, the top left box has 0. The first score for 0-B is -1 + 0 = -1. The top box has 0, the second score is calculated by adding the indel value, -1; the second score for 0-B is 0 + (-1) = -1. The left box has -1, the third score is calculated by adding the indel value, -1; the third score for 0-B is -1 + (-1) = -2. The maximum of the first to third scores for 0-B is -1 from both, first and second scores for 0-B. The box 0-B thus receives the value -1. Each of the top left and top boxes contribute to the result and are noted.

0-E: similarity for this pair is a mismatch, thus receives -1, the top left box has 0. The first score for 0-B is -1 + 0 = -1. The top box has 2, the second score is calculated by adding the indel value, -1; the second score for 0-E is 2 + (-1) = 1. The left box has -1, the third score is calculated by adding the indel value, -1; the third score for 0-E is -1 + (-1) = -2. The maximum of the first to third scores for 0-B is 1 from the second score for 0-E. The box 0-E thus receives the value 1. The box contributing to the result is top and is noted.

0-O: similarity for this pair in this example is a mismatch, thus receives -1, the top left box has 2. The first score for 0-O is -1 + 2 = 1. The top box has 1, the second score is calculated by adding the indel value, -1; the second score for 0-O is 1 + (-1) = 0. The left box has 1, the third score is calculated by adding the indel value, -1; the third score for 0-O is 1+ (-1) = 0. The maximum of the first to third scores for 0-O is 1 from the first score for 0-O. The box 0-O thus receives the value 1. The box contributing to the result is top left and is noted.

0-4: similarity for this pair is a mismatch, thus receives -1, the top left box has 1. The first score for 0-4 is -1 + 1 = 0. The top box has 0, the second score is calculated by adding the indel value, -1; the second score for 0-4 is 0 + (-1) = -1. The left box is 1, the third score is calculated by adding the indel value, -1; the third score for 0-4 is 1 + (-1) = 0. The maximum of the first to third scores for 0-4 is 0 from both, first and third scores for 0-4. The box 0-4 thus receives the value 0, each of the top left and left boxes contribute to the result and are noted.

4-H: similarity for this pair is a mismatch, thus receives -1, the top left box has -5. The first score for 4-H is -1 + (-5) = -6. The top box has -3, the second score is calculated by adding the indel value, -1; the second score for 4-H is -3 + (-1) = -4. The left box is -6, the third score is calculated by adding the indel value, -1; the third score for 4-H is -6 + (-1) = -7. The maximum of the first to third scores for 4-H is -4 from the second score for 4-H. The box 4-H thus receives the value -4. The box contributing to the result is top and is noted.

4-A: similarity for this pair is a mismatch, thus receives -1, the top left box has -3. The first score for 4-A is -1 + (-3) = -4. The top box has -1, the second score is calculated by adding the indel value, -1; the second score for 4-A is -1 + (-1) = -2. The left box is -4, the third score is calculated by adding the indel value, -1; the third score for 4-A is -4 + (-1) = -5. The maximum of the first to third scores for 4-A is -2 from the second score for 4-A. The box 4-A thus receives the value -2. The box contributing to the result is top and is noted.

4-B: similarity for this pair is a mismatch, thus receives -1, the top left box has -1. The first score for 4-B is -1 + (-1) = -2. The top box has -1, the second score is calculated by adding the indel value, -1; the second score for 4-B is -1 + (-1) = -2. The left box is -2, the third score is calculated by adding the indel value, -1; the third score for 4-B is -2 + (-1) = -3. The maximum of the first to third scores for 4-B is -2 from both, first and second scores for 4-B. The box 4-B thus receives the value -2. Each of the top left and top boxes contribute to the result and are noted.

4-E: similarity for this pair is a mismatch, thus receives -1, the top left box has -1. The first score for 4-E is -1 + (-1) = -2. The top box has 1, the second score is calculated by adding the indel value, -1; the second score for 4-E is 1 + (-1) = 0. The left box is -2, the third score is calculated by adding the indel value, -1; the third score for 4-E is -2 + (-1) = -3. The maximum of the first to third scores for 4-E is 0 from the second score for 4-E. The box 4-E thus receives the value 0. The box contributing to the result is top and is noted.

4-O: similarity for this pair is a mismatch, thus receives -1, the top left box has 1. The first score for 4-0 is -1 + 1 = 0. The top box has 1, the second score is calculated by adding the indel value, -1; the second score for 4-O 1 + (-1) = 0. The left box is 0, the third score is calculated by adding the indel value, -1; the third score for 4-0 is 0 + (-1) = -1. The maximum of the first to third scores for 4-0 is 0 from both, first and second scores for 4-O. The box 4-0 thus receives the value 0. Each of the top left and top boxes contribute to the result and are noted.

4-4: similarity of this pair is a match, thus receives 1. The top left box has 1. The first score for 4-4 is 1 + 1 = 2. The top box has 0, the second score is calculated by adding the indel value, -1; the second score for 4-4 is 0 + (-1) = -1. The left box is 0, the third score is calculated by adding the indel value, -1; the third score for 4-4 is 0 + (-1) = -1. The maximum of the first to third scores for 4-4 is 2 from the first score for 4-4. The box 4-4 thus receives the value 2. The box contributing to the result is top left and is noted.

From the last box, the alignment can be traced back by following the track of the box contributing to the result for each respective box. If the contributing box is top left there is a match or mismatch, the letter of the column and the letter of the row align. If the contributing box is top or left, there is an indel, where top contributing boxes align a gap to the letter of the row, and left contributing boxes align a gap to the letter of the column. If there is more than one box contributing to the result in a respective box, more than one alignment is possible. Both alignments can be noted.

For the example above the track starts at 4-4 and thus proceeds in the order 4-4, from there top-left to 0-O, from there top left to E-E, from there top left to C-B, from there top left to A-A, from there top left to H-H. As the first and second character strings are short and of equal length, the alignment traces along the match/mismatch contributing boxes.

Let us now consider a sequence alignment, where the mismatch of 0 and O receives an intermediate value for being a fluid mismatch. In the example, the first character string again is HABEO4. The second character string is HACE04. The scoring in this example corresponds essentially to the above scoring, where a match receives +1, a mismatch and an indel receive -1, with the addition that the fluid mismatch of 0-O receives +1. However, for this or other pairs with a risk of confusion, lower fluid mismatch values can be applied. Preferably, the fluid mismatch score is in a range between and including the mismatch score and the match score.

The grid of boxes is filled corresponding to the example above, wherein the boxes until the row of E and the column of E receive the same score as the fluid mismatch has not been applied up to those rows and columns. The boxes HH to 0-E are thus the same as above and are not repeated here. The respective boxes contributing to the result are indicated by respective arrows.

Fig. 2B shows the grid of boxes according to this example. The dissimilarity of C-B persists and is marked with a blue circle in Fig. 2B.

The boxes 0-O, 0-4, 4-O and 4-4 are then determined as follows:

0-O: similarity for this pair in this example is a fluid mismatch, thus receives +1, the top left box has 2. The first score for 0-O is 1 + 2 = 3. The top box has 1, the second score is calculated by adding the indel value, -1; the second score for 0-O is 1 + (-1) = 0. The left box has 1, the third score is calculated by adding the indel value, -1; the third score for 0-O is 1+ (-1) = 0. The maximum of the first to third scores for 0-O is 3 from the first score for 0-O. The box 0-O thus receives the value 3. The box contributing to the result is top left and is indicated by an arrow in this example.

0-4: similarity for this pair is a mismatch, thus receives -1, the top left box has 3. The first score for 0-4 is -1 + 3 = 2. The top box has 0, the second score is calculated by adding the indel value, -1; the second score for 0-4 is 0 + (-1) = -1. The left box is 1, the third score is calculated by adding the indel value, -1; the third score for 0-4 is 1 + (-1) = 0. The maximum of the first to third scores for 0-4 is 2 from the first score for 0-4. The box 0-4 thus receives the value 2. The box contributing to the result is left.

4-O: similarity for this pair is a mismatch, thus receives -1, the top left box has 1. The first score for 4-O is -1 + 1 = 0. The top box has 3, the second score is calculated by adding the indel value, -1; the second score for 4-O is 3 + (-1) = 2. The left box is 0, the third score is calculated by adding the indel value, -1; the third score for 4-O is 0 + (-1) = -1. The maximum of the first to third scores for 4-O is 2 from the second score for 4-O. The box 4-O thus receives the value 2. The box contributing to the result is top.

4-4: similarity for this pair is a match, thus receives 1. The top left box has 3. The first score for 4-4 is 1 + 3 = 4. The top box has 2, the second score is calculated by adding the indel value, -1; the second score for 4-4 is 2 + (-1) = 1. The left box has 2, the third score is calculated by adding the indel value, -1; the third score for 4-4 is 2 + (-1) = 1. The maximum of the first to third scores for 4-4 is 4 from the first score for 4-4. The box 4-4 thus receives the value 4. The box contributing to the result is top left and is indicated by an arrow in this example.

From the last box, the alignment can be traced back by following the arrows. For the example applying the fluid mismatch, the track starts at 4-4 and thus proceeds in the order 4-4, to 0-O, to E-E, to C-B, to A-A, to H-H. As the first and second character strings are short and of equal length, the alignment traces along the match/mismatch contributing boxes. The alignment corresponds to the previous alignment where no fluid mismatch has been applied. However, the last box, 4-4 , of the example applying the fluid mismatch has a higher score, namely 4, than the previous example where no fluid mismatch has been applied. As ALPR primarily is concerned with the question whether a license plate corresponds to another license plate, the increased last score helps determining that two sequences representing license plates are so similar that identity can be assumed.

In various embodiments, the method determining whether two sequences representing license plates are similar applies a threshold for a score in the last box, that is, the lower right box, of the grid of boxes and determines that two sequences are identical if the score in the last box is above that threshold. In various embodiments the threshold is dependent on the length of at least one of the character strings. In various embodiments the threshold is at least 80% of the number of characters in at least one of the character strings. In further embodiments the threshold is at least 60% of the number of characters in at least one of the character strings.

Fig. 3A shows a table for an example of the inventive method, where the first character string is HABEO4 and the second character string is HABE04, that is, the first and second character strings only differ by one character of similar visual appearance, namely O and 0. As in the example immediately above, the scoring applies +1 for a match, -1 for a mismatch and an indel, and the fluid mismatch of 0-O receives +1. As can be seen in this table, the last box on the lower right contains the same score as would be present with identical character strings. This is because in this example the different characters of similar visual appearance are treated the same as identical characters, that is the dissimilarity of 0-O, marked with a blue circle, is treated the same way as a match due to the visual similarity of 0 and O. If the fluid mismatch receives a scoring below the scoring for a match, the value on the lower right will be reduced correspondingly.

Fig. 3B shows a table for an example of the inventive method, where the first character string is HABEO4 and the second character string is WHABE04. That is, in this example the second character string has one more character, which additional character is found at the first position of the second character string. Such additional character may either be due to an incorrect reading of the license plate when the first character string was read and the first character of this string was not recognized such that the first character string is not an exact reading of the license plate, or due to an incorrect reading of the license plate when the second character string was read and some artefact was incorrectly recognized as a character, presently as W. Such character is treated as an indel. The box on the lower right now contains a lower score than the example immediately above of Fig. 3A. The trace back starting in the lower right leads to the field H-H. H-H is scored at 0 and thus lower than in the previous example due to the additional character in the second character string.

When comparing the examples of Figs. 3A and 3B, please note that the score in the lower right box is higher in Fig. 3A. This is because the example of Fig. 3B has an additional character in the second character string such that the ALPR according to the present embodiments will consider the first and second character strings from this example less similar than the first and second character strings from the example of Fig. 3A. Accordingly, when an ALPR determines similarity for both examples, the ALPR is more likely to approve similarity for the example from Fig. 3A than for the example of Fig. 3B.

In various embodiments characters, both letters and numbers, are compared against each other to determine a likelihood that any two characters are confused. On that basis the fluid mismatch is determined, where the fluid mismatch his higher when a likelihood of confusion is higher. In above examples 0 and O were considered so similar that the fluid mismatch received the same score as a match. This mismatch consequently has a lower impact on a similarity score. When the similarity of the characters is too low, the mismatch will be set to a lower number resulting in a decreasing similarity score. This can be adjusted for different countries, which will be necessary as each country has their own pairs of letters or numbers that cause issues.

In further embodiments the similarities of different letters in different countries can be combined. Most parking lots have cars from different regions entering often e.g., in an Austrian parking lot there is a high chance of having cars from Austria, Germany, Italy etc. depending on the location of the parking lot.

With avoiding physical data carriers, the only common identification property is the license plate. To improve the general ALPR detection rate it is a possible strategy to provide more cameras from various angles. This is rather expensive, and it still needs some logic to select the correct license plate from various results.

Without touching the ALPR system itself there are methods known to correct the reading results based on additional semantic information (i.e., the grammar for a certain country). By this it is possible to correct single characters (e.g., if it is known that at a certain position only a letter is allowed and no number). However, this correction is not trivial and needs either a lot of specific data for training or local knowledge about the regulations of each country. It also has its limitations when vehicles from different countries with different grammars use the same parking facility.

To further improve a recognition rate, it is possible to provide additional classifiers for a vehicle besides the license plate. Such classifiers could be, for example, the colour, model or brand.

## Claims

1. A method for recognizing a register plate, the method comprising:
- providing a first sequence of characters;
- providing a second sequence of characters; and
- determining a similarity between the first and second sequences of characters; wherein at least one of the first and second sequences of characters is recorded by an image detecting device and determining the similarity comprises:
- comparing each character of the first sequence with each character of the second sequence, wherein comparing comprises:
- determining for the i-th character of the first sequence and the j-th character of the second sequence:
- a first sum of a similarity score for the i-th character of the first sequence and the j-th character of the second sequence as a first term of the first sum, and a maximum similarity score of the (i-1)-th character of the first sequence and the (j-1)-th character of the second sequence as a second term of the first sum;
- a second sum of a maximum similarity score of the (i-1)-th character of the first sequence and the j-th character of the second sequence as a first term of the second sum, and a first gap penalty value as a second term of the second sum;
- a third sum of a maximum similarity score of the i-th character of the first sequence and the (j-1)-th character of the second sequence as a first term of the third sum, and a second gap penalty value as a second term of the third sum; and
- a maximum value among each of the results of the first, second and third sums;
- storing the maximum value as a maximum similarity score for each comparing of each character of the first sequence with each character of the second sequence;
- determining the maximum of the stored maximum values;
wherein the similarity score has a highest value if the i-th character of the first sequence and the j-th character of the second sequence are identical, has an intermediate value if the i-th character of the first sequence and the j-th character of the second sequence are different and have a similar visual appearance, and has a lowest value if the i-th character of the first sequence and the j-th character of the second sequence are different and have a dissimilar visual appearance.

2. The method of claim 1, wherein "i" equals "1" for the first character of the first sequence, "j" equals "1" for the first character of the second sequence, a maximum similarity score for "i" equal "0" and "j" equal "0" is zero, a maximum similarity score for the i-th character of the first sequence and "j" equal zero is a fourth sum of the maximum similarity score of the (i-1)-th character of the first sequence and a third gap penalty, and a maximum similarity score for "i" equal zero and the j-th character of the second sequence is a fifth sum of a fourth gap penalty and the maximum similarity score of the (j-1)-th character of the second sequence.

3. The method of claims 1 or 2, wherein the intermediate value is based on a probability that the i-th character of the first sequence and the j-th character of the second sequence are confused based on their visual appearance.

4. The method of claims 1 to 3, wherein at least one of the first and second sequences of characters is read from a register plate.

5. The method of claim 4, wherein the intermediate value is based on an assessment of an organisation of origin of the register plate and on an assessment of similarities of different characters used for register plates of the respective organisation.

6. The method of claims 1 to 5, further comprising providing representations of characters eligible for a register plate, pairwise comparing the representations of different characters with each other, assessing a probability of confusion for each pair of representations of different characters based on their visual appearance, based on the probability of confusion distinguishing pairs of representations of different characters where confusion is probable, and for the pairs of representations of different characters where confusion is probable determining the intermediate value based on the probability of confusion.

7. A device for recognizing a register plate, the device comprising an interface for receiving signals from an image detecting device and a processor, the processor being configured to:
- providing a first sequence of characters;
- providing a second sequence of characters; and
- determining a similarity between the first and second sequences of characters; wherein at least one of the first and second sequences of characters is received from an image detecting device via the interface and determining the similarity comprises:
- comparing each character of the first sequence with each character of the second sequence, wherein comparing comprises:
- determining for the i-th character of the first sequence and the j-th character of the second sequence:
- a first sum of a similarity score for the i-th character of the first sequence and the j-th character of the second sequence as a first term of the first sum, and a maximum similarity score of the (i-1)-th character of the first sequence and the (j-1)-th character of the second sequence as a second term of the first sum;
- a second sum of a maximum similarity score of the (i-1)-th character of the first sequence and the j-th character of the second sequence as a first term of the second sum, and a first gap penalty value as a second term of the second sum;
- a third sum of a maximum similarity score of the i-th character of the first sequence and the (j-1)-th character of the second sequence as a first term of the third sum, and a second gap penalty value as a second term of the third sum; and
- a maximum value among each of the results of the first, second and third sums;
- storing the maximum value as a maximum similarity score for each comparing of each character of the first sequence with each character of the second sequence;
- determining the maximum of the stored maximum values;
wherein the similarity score has a highest value if the i-th character of the first sequence and the j-th character of the second sequence are identical, has an intermediate value if the i-th character of the first sequence and the j-th character of the second sequence are different and have a similar visual appearance, and has a lowest value if the i-th character of the first sequence and the j-th character of the second sequence are different and have a dissimilar visual appearance.

8. A system for recognizing a register plate, the system comprising an image detecting device and a processor, the processor being configured to:
- providing a first sequence of characters;
- providing a second sequence of characters; and
- determining a similarity between the first and second sequences of characters; wherein at least one of the first and second sequences of characters is received from the image detecting device and determining the similarity comprises:
- comparing each character of the first sequence with each character of the second sequence, wherein comparing comprises:
- determining for the i-th character of the first sequence and the j-th character of the second sequence:
- a first sum of a similarity score for the i-th character of the first sequence and the j-th character of the second sequence as a first term of the first sum, and a maximum similarity score of the (i-1)-th character of the first sequence and the (j-1)-th character of the second sequence as a second term of the first sum;
- a second sum of a maximum similarity score of the (i-1)-th character of the first sequence and the j-th character of the second sequence as a first term of the second sum, and a first gap penalty value as a second term of the second sum;
- a third sum of a maximum similarity score of the i-th character of the first sequence and the (j-1)-th character of the second sequence as a first term of the third sum, and a second gap penalty value as a second term of the third sum; and
- a maximum value among each of the results of the first, second and third sums;
- storing the maximum value as a maximum similarity score for each comparing of each character of the first sequence with each character of the second sequence;
- determining the maximum of the stored maximum values;
wherein the similarity score has a highest value if the i-th character of the first sequence and the j-th character of the second sequence are identical, has an intermediate value if the i-th character of the first sequence and the j-th character of the second sequence are different and have a similar visual appearance, and has a lowest value if the i-th character of the first sequence and the j-th character of the second sequence are different and have a dissimilar visual appearance.

9. The system of claim 8, wherein the image detecting device is an optical camera.
